# EUROPEAN PATENT APPLICATION

(11) **EP 4 718 265 A1**
(43) Date of publication of application: **01.04.2026**
(21) Application number: 25189808.6
(22) Date of filing: 16.07.2025
(51) Int. Cl.: G06F 11/34, G06F 11/30

(54) **APPARATUS AND METHOD FOR FINE GRAIN USER MODE CONTROL FOR READING PERFORMANCE MONITOR COUNTERS**

(30) Priority: 27.09.2024 US 202418900545
(71) Applicant: INTEL Corporation, Santa Clara, CA 95054 (US)
(72) Inventor: Kleen, Andreas, Portland, 97209 (US); Yasin, Ahmad, 1790700 Kafr Manda (IL); Cohen, Moshe, 30900 Zichron Yaakov (IL)
(74) Representative: Goddar, Heinz J.

(57) **Abstract**

An apparatus for managing access to performance counters. one embodiment of a processor comprises: a plurality of cores to execute first program code at a first privilege level and second program code at a second privilege level higher than the first privilege level, a core of the plurality of cores comprising: performance monitoring circuitry including a plurality of performance counter control registers to indicate events to be counted by a corresponding plurality of performance counters; and a processor control register to store a global control value to indicate whether the first program code is permitted to read values from the corresponding plurality of performance counters; wherein each performance counter control register is to store a per-counter control value to indicate whether the first program code executed at the first privilege level is permitted to read a corresponding value from a respective performance counter, regardless of the global control value.

## Description

### BACKGROUND

### Field of the Invention

This invention relates generally to the field of computer processors. More particularly, the invention relates to an apparatus and method for fine grain user mode control for reading performance monitor counters.

### Description of the Related Art

RDPMC (Read Performance Monitor Counter) is an instruction for reading hardware performance counters in applications. Normally hardware performance counters can be only read in ring 0, the most privileged level in the architecture's protection subsystem. Thus, ring 0 (operating system kernel level) is a higher privilege level than ring 3 (application privilege level). For an application to read a performance counter in ring 0, it can make a call into the operating system kernel, which is too slow for many use cases. The kernel can allow the use of performance counters outside of ring 0 by setting a single bit in the CR4 status register. Once the CR4 status register bit is set, any ring 3 application can then read any of the performance counters via the RDPMC instruction.

Modern performance counter APIs (like Linux perf) can have owners for different performance counters in different security contexts (for example different processes with different user IDs or different containers). There can be also global performance counters owned by the system. These can be all active at the same time when mapped to the physical performance counters of the hardware.

Performance counter events are not always allowed for all security contexts. For example an unprivileged application may not be allowed to count hardware performance events in a ring 0 context, but only allowed to monitor ring 3.

### BRIEF DESCRIPTION OF THE DRAWINGS

A better understanding of the present invention can be obtained from the following detailed description in conjunction with the following drawings, in which:
FIG. 1 illustrates an example computer system architecture.
FIG. 2 illustrates a processor comprising a plurality of cores.
FIG. 3A illustrates a plurality of stages of a processing pipeline.
FIG. 3B illustrates details of one embodiment of a core.
FIG. 4 illustrates execution circuitry in accordance with one embodiment.
FIG. 5 illustrates one embodiment of a register architecture.
FIG. 6 illustrates one example of an instruction format.
FIG. 7 illustrates addressing techniques in accordance with one embodiment.
FIG. 8 illustrates one embodiment of an instruction prefix.
FIGS. 9A-D illustrate embodiments of how the R, X, and B fields of the prefix are used.
FIGS. 10A-B illustrate examples of a second instruction prefix.
FIG. 11 illustrates payload bytes of one embodiment of an instruction prefix.
FIG. 12 illustrates instruction conversion and binary translation implementations.
FIG. 13 illustrates a processor architecture for implementing various components of a performance monitoring facility.
FIG. 14 illustrates an example processor with performance monitoring circuitry in accordance with embodiments of the invention.
FIG. 15 illustrates a method in accordance with at least one embodiment of the invention.
FIG. 16 illustrates another method in accordance with at least one embodiment of the invention.

### DETAILED DESCRIPTION

In the following description, for the purposes of explanation, numerous specific details are set forth in order to provide a thorough understanding of the embodiments of the invention described below. It will be apparent, however, to one skilled in the art that the embodiments of the invention may be practiced without some of these specific details. In other instances, well-known structures and devices are shown in block diagram form to avoid obscuring the underlying principles of the embodiments of the invention.

### Exemplary Computer Architectures

Detailed below are describes of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

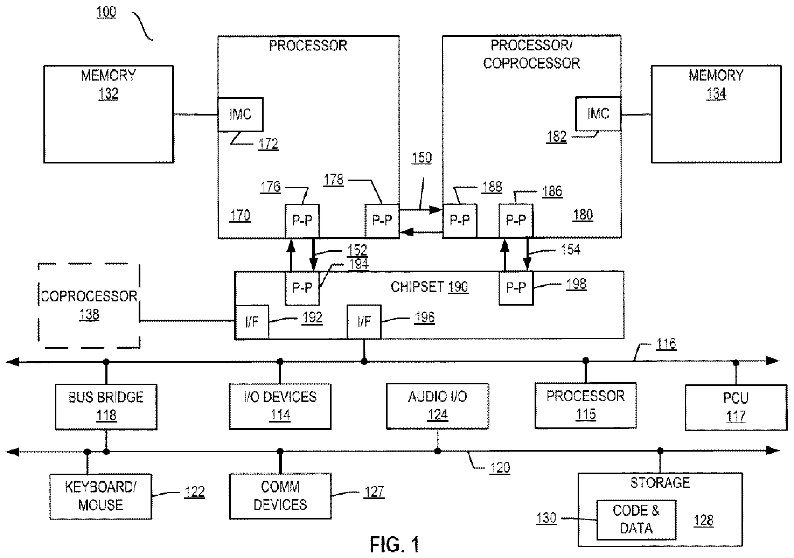

**FIG. 1** illustrates embodiments of an exemplary system. Multiprocessor system 100 is a point-to-point interconnect system and includes a plurality of processors including a first processor 170 and a second processor 180 coupled via a point-to-point interconnect 150. In some embodiments, the first processor 170 and the second processor 180 are homogeneous. In some embodiments, first processor 170 and the second processor 180 are heterogenous.

Processors 170 and 180 are shown including integrated memory controller (IMC) units circuitry 172 and 182, respectively. Processor 170 also includes as part of its interconnect controller units point-to-point (P-P) interfaces 176 and 178; similarly, second processor 180 includes P-P interfaces 186 and 188. Processors 170, 180 may exchange information via the point-to-point (P-P) interconnect 150 using P-P interface circuits 178, 188. IMCs 172 and 182 couple the processors 170, 180 to respective memories, namely a memory 132 and a memory 134, which may be portions of main memory locally attached to the respective processors.

Processors 170, 180 may each exchange information with a chipset 190 via individual P-P interconnects 152, 154 using point to point interface circuits 176, 194, 186, 198. Chipset 190 may optionally exchange information with a coprocessor 138 via a high-performance interface 192. In some embodiments, the coprocessor 138 is a special-purpose processor, such as, for example, a high-throughput MIC processor, a network or communication processor, compression engine, graphics processor, GPGPU, embedded processor, or the like.

A shared cache (not shown) may be included in either processor 170, 180 or outside of both processors, yet connected with the processors via P-P interconnect, such that either or both processors' local cache information may be stored in the shared cache if a processor is placed into a low power mode.

Chipset 190 may be coupled to a first interconnect 116 via an interface 196. In some embodiments, first interconnect 116 may be a Peripheral Component Interconnect (PCI) interconnect, or an interconnect such as a PCI Express interconnect or another I/O interconnect. In some embodiments, one of the interconnects couples to a power control unit (PCU) 117, which may include circuitry, software, and/or firmware to perform power management operations with regard to the processors 170, 180 and/or co-processor 138. PCU 117 provides control information to a voltage regulator to cause the voltage regulator to generate the appropriate regulated voltage. PCU 117 also provides control information to control the operating voltage generated. In various embodiments, PCU 117 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 117 is illustrated as being present as logic separate from the processor 170 and/or processor 180. In other cases, PCU 117 may execute on a given one or more of cores (not shown) of processor 170 or 180. In some cases, PCU 117 may be implemented as a microcontroller (dedicated or general-purpose) or other control logic configured to execute its own dedicated power management code, sometimes referred to as P-code. In yet other embodiments, power management operations to be performed by PCU 117 may be implemented externally to a processor, such as by way of a separate power management integrated circuit (PMIC) or another component external to the processor. In yet other embodiments, power management operations to be performed by PCU 117 may be implemented within BIOS or other system software.

Various I/O devices 114 may be coupled to first interconnect 116, along with an interconnect (bus) bridge 118 which couples first interconnect 116 to a second interconnect 120. In some embodiments, one or more additional processor(s) 115, such as coprocessors, high-throughput MIC processors, GPGPU's, accelerators (such as, e.g., graphics accelerators or digital signal processing (DSP) units), field programmable gate arrays (FPGAs), or any other processor, are coupled to first interconnect 116. In some embodiments, second interconnect 120 may be a low pin count (LPC) interconnect. Various devices may be coupled to second interconnect 120 including, for example, a keyboard and/or mouse 122, communication devices 127 and a storage unit circuitry 128. Storage unit circuitry 128 may be a disk drive or other mass storage device which may include instructions/code and data 130, in some embodiments. Further, an audio I/O 124 may be coupled to second interconnect 120. Note that other architectures than the point-to-point architecture described above are possible. For example, instead of the point-to-point architecture, a system such as multiprocessor system 100 may implement a multi-drop interconnect or other such architecture.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die as the described CPU (sometimes referred to as the application core(s) or application processor(s)), the above described coprocessor, and additional functionality. Exemplary core architectures are described next, followed by descriptions of exemplary processors and computer architectures.

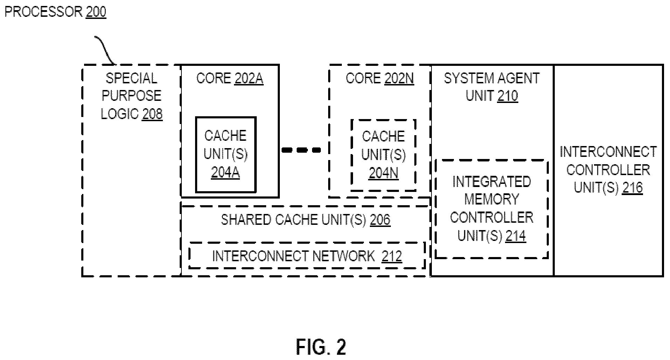

**FIG. 2** illustrates a block diagram of embodiments of a processor 200 that may have more than one core, may have an integrated memory controller, and may have integrated graphics. The solid lined boxes illustrate a processor 200 with a single core 202A, a system agent 210, a set of one or more interconnect controller units circuitry 216, while the optional addition of the dashed lined boxes illustrates an alternative processor 200 with multiple cores 202(A)-(N), a set of one or more integrated memory controller unit(s) circuitry 214 in the system agent unit circuitry 210, and special purpose logic 208, as well as a set of one or more interconnect controller units circuitry 216. Note that the processor 200 may be one of the processors 170 or 180, or co-processor 138 or 115 of **FIG. 1****.**

Thus, different implementations of the processor 200 may include: 1) a CPU with the special purpose logic 208 being integrated graphics and/or scientific (throughput) logic (which may include one or more cores, not shown), and the cores 202(A)-(N) being one or more general purpose cores (e.g., general purpose in-order cores, general purpose out-of-order cores, or a combination of the two); 2) a coprocessor with the cores 202(A)-(N) being a large number of special purpose cores intended primarily for graphics and/or scientific (throughput); and 3) a coprocessor with the cores 202(A)-(N) being a large number of general purpose in-order cores. Thus, the processor 200 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 200 may be a part of and/or may be implemented on one or more substrates using any of a number of process technologies, such as, for example, BiCMOS, CMOS, or NMOS.

A memory hierarchy includes one or more levels of cache unit(s) circuitry 204(A)-(N) within the cores 202(A)-(N), a set of one or more shared cache units circuitry 206, and external memory (not shown) coupled to the set of integrated memory controller units circuitry 214. The set of one or more shared cache units circuitry 206 may include one or more mid-level caches, such as level 2 (L2), level 3 (L3), level 4 (L4), or other levels of cache, such as a last level cache (LLC), and/or combinations thereof. While in some embodiments ring-based interconnect network circuitry 212 interconnects the special purpose logic 208 (e.g., integrated graphics logic), the set of shared cache units circuitry 206, and the system agent unit circuitry 210, alternative embodiments use any number of well-known techniques for interconnecting such units. In some embodiments, coherency is maintained between one or more of the shared cache units circuitry 206 and cores 202(A)-(N).

In some embodiments, one or more of the cores 202(A)-(N) are capable of multi-threading. The system agent unit circuitry 210 includes those components coordinating and operating cores 202(A)-(N). The system agent unit circuitry 210 may include, for example, power control unit (PCU) circuitry and/or display unit circuitry (not shown). The PCU may be or may include logic and components needed for regulating the power state of the cores 202(A)-(N) and/or the special purpose logic 208 (e.g., integrated graphics logic). The display unit circuitry is for driving one or more externally connected displays.

The cores 202(A)-(N) may be homogenous or heterogeneous in terms of architecture instruction set; that is, two or more of the cores 202(A)-(N) may be capable of executing the same instruction set, while other cores may be capable of executing only a subset of that instruction set or a different instruction set.

### Exemplary Core Architectures

### In-order and out-of-order core block diagram

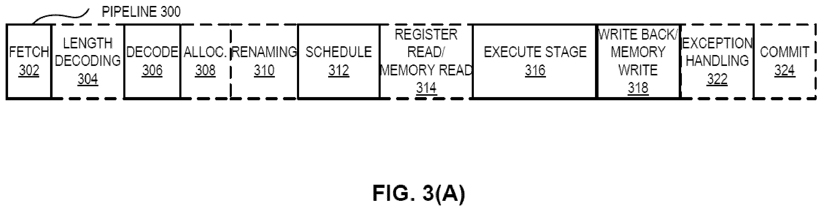

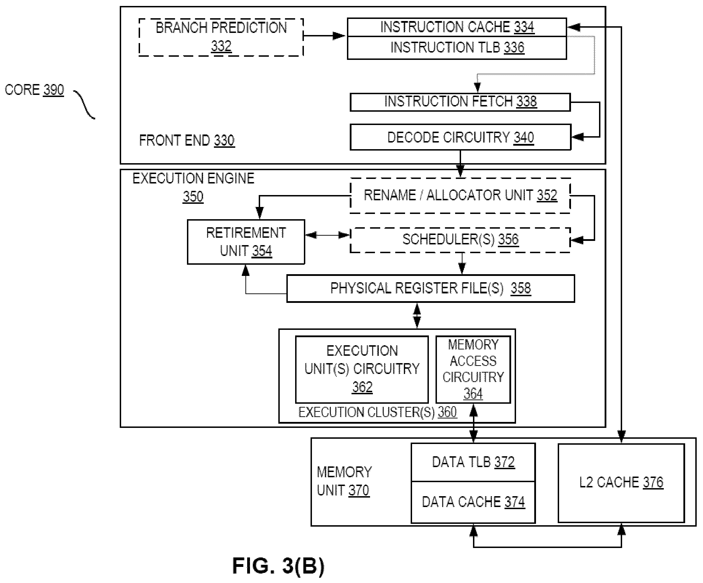

**FIG. 3(A)** is a block diagram illustrating both an exemplary in-order pipeline and an exemplary register renaming, out-of-order issue/execution pipeline according to embodiments of the invention. **FIG. 3(B)** is a block diagram illustrating both an exemplary embodiment of an in-order architecture core and an exemplary register renaming, out-of-order issue/execution architecture core to be included in a processor according to embodiments of the invention. The solid lined boxes in FIGS. **3(A)****-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 3(A)****,** a processor pipeline 300 includes a fetch stage 302, an optional length decode stage 304, a decode stage 306, an optional allocation stage 308, an optional renaming stage 310, a scheduling (also known as a dispatch or issue) stage 312, an optional register read/memory read stage 314, an execute stage 316, a write back/memory write stage 318, an optional exception handling stage 322, and an optional commit stage 324. One or more operations can be performed in each of these processor pipeline stages. For example, during the fetch stage 302, one or more instructions are fetched from instruction memory, during the decode stage 306, the one or more fetched instructions may be decoded, addresses (e.g., load store unit (LSU) addresses) using forwarded register ports may be generated, and branch forwarding (e.g., immediate offset or an link register (LR)) may be performed. In one embodiment, the decode stage 306 and the register read/memory read stage 314 may be combined into one pipeline stage. In one embodiment, during the execute stage 316, the decoded instructions may be executed, LSU address/data pipelining to an Advanced Microcontroller Bus (AHB) interface may be performed, multiply and add operations may be performed, arithmetic operations with branch results may be performed, etc.

By way of example, the exemplary register renaming, out-of-order issue/execution core architecture may implement the pipeline 300 as follows: 1) the instruction fetch 338 performs the fetch and length decoding stages 302 and 304; 2) the decode unit circuitry 340 performs the decode stage 306; 3) the rename/allocator unit circuitry 352 performs the allocation stage 308 and renaming stage 310; 4) the scheduler unit(s) circuitry 356 performs the schedule stage 312; 5) the physical register file(s) unit(s) circuitry 358 and the memory unit circuitry 370 perform the register read/memory read stage 314; the execution cluster 360 perform the execute stage 316; 6) the memory unit circuitry 370 and the physical register file(s) unit(s) circuitry 358 perform the write back/memory write stage 318; 7) various units (unit circuitry) may be involved in the exception handling stage 322; and 8) the retirement unit circuitry 354 and the physical register file(s) unit(s) circuitry 358 perform the commit stage 324.

**FIG. 3(B)** shows processor core 390 including front-end unit circuitry 330 coupled to an execution engine unit circuitry 350, and both are coupled to a memory unit circuitry 370. The core 390 may be a reduced instruction set computing (RISC) core, a complex instruction set computing (CISC) core, a very long instruction word (VLIW) core, or a hybrid or alternative core type. As yet another option, the core 390 may be a special-purpose core, such as, for example, a network or communication core, compression engine, coprocessor core, general purpose computing graphics processing unit (GPGPU) core, graphics core, or the like.

The front end unit circuitry 330 may include branch prediction unit circuitry 332 coupled to an instruction cache unit circuitry 334, which is coupled to an instruction translation lookaside buffer (TLB) 336, which is coupled to instruction fetch unit circuitry 338, which is coupled to decode unit circuitry 340. In one embodiment, the instruction cache unit circuitry 334 is included in the memory unit circuitry 370 rather than the front-end unit circuitry 330. The decode unit circuitry 340 (or decoder) may decode instructions, and generate as an output one or more micro-operations, micro-code entry points, microinstructions, other instructions, or other control signals, which are decoded from, or which otherwise reflect, or are derived from, the original instructions. The decode unit circuitry 340 may further include an address generation unit circuitry (AGU, not shown). In one embodiment, the AGU generates an LSU address using forwarded register ports, and may further perform branch forwarding (e.g., immediate offset branch forwarding, LR register branch forwarding, etc.). The decode unit circuitry 340 may be implemented using various different mechanisms. Examples of suitable mechanisms include, but are not limited to, look-up tables, hardware implementations, programmable logic arrays (PLAs), microcode read only memories (ROMs), etc. In one embodiment, the core 390 includes a microcode ROM (not shown) or other medium that stores microcode for certain macroinstructions (e.g., in decode unit circuitry 340 or otherwise within the front end unit circuitry 330). In one embodiment, the decode unit circuitry 340 includes a micro-operation (micro-op) or operation cache (not shown) to hold/cache decoded operations, micro-tags, or micro-operations generated during the decode or other stages of the processor pipeline 300. The decode unit circuitry 340 may be coupled to rename/allocator unit circuitry 352 in the execution engine unit circuitry 350.

The execution engine circuitry 350 includes the rename/allocator unit circuitry 352 coupled to a retirement unit circuitry 354 and a set of one or more scheduler(s) circuitry 356. The scheduler(s) circuitry 356 represents any number of different schedulers, including reservations stations, central instruction window, etc. In some embodiments, the scheduler(s) circuitry 356 can include arithmetic logic unit (ALU) scheduler/scheduling circuitry, ALU queues, arithmetic generation unit (AGU) scheduler/scheduling circuitry, AGU queues, etc. The scheduler(s) circuitry 356 is coupled to the physical register file(s) circuitry 358. Each of the physical register file(s) circuitry 358 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one embodiment, the physical register file(s) unit circuitry 358 includes vector registers unit circuitry, writemask registers unit circuitry, and scalar register unit circuitry. These register units may provide architectural vector registers, vector mask registers, general-purpose registers, etc. The physical register file(s) unit(s) circuitry 358 is overlapped by the retirement unit circuitry 354 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 354 and the physical register file(s) circuitry 358 are coupled to the execution cluster(s) 360. The execution cluster(s) 360 includes a set of one or more execution units circuitry 362 and a set of one or more memory access circuitry 364. The execution units circuitry 362 may perform various arithmetic, logic, floating-point or other types of operations (e.g., shifts, addition, subtraction, multiplication) and on various types of data (e.g., scalar floating-point, packed integer, packed floating-point, vector integer, vector floating-point). While some embodiments may include a number of execution units or execution unit circuitry dedicated to specific functions or sets of functions, other embodiments may include only one execution unit circuitry or multiple execution units/execution unit circuitry that all perform all functions. The scheduler(s) circuitry 356, physical register file(s) unit(s) circuitry 358, and execution cluster(s) 360 are shown as being possibly plural because certain embodiments create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) unit circuitry, and/or execution cluster - and in the case of a separate memory access pipeline, certain embodiments are implemented in which only the execution cluster of this pipeline has the memory access unit(s) circuitry 364). It should also be understood that where separate pipelines are used, one or more of these pipelines may be out-of-order issue/execution and the rest in-order.

In some embodiments, the execution engine unit circuitry 350 may perform load store unit (LSU) address/data pipelining to an Advanced Microcontroller Bus (AHB) interface (not shown), and address phase and writeback, data phase load, store, and branches.

The set of memory access circuitry 364 is coupled to the memory unit circuitry 370, which includes data TLB unit circuitry 372 coupled to a data cache circuitry 374 coupled to a level 2 (L2) cache circuitry 376. In one exemplary embodiment, the memory access units circuitry 364 may include a load unit circuitry, a store address unit circuit, and a store data unit circuitry, each of which is coupled to the data TLB circuitry 372 in the memory unit circuitry 370. The instruction cache circuitry 334 is further coupled to a level 2 (L2) cache unit circuitry 376 in the memory unit circuitry 370. In one embodiment, the instruction cache 334 and the data cache 374 are combined into a single instruction and data cache (not shown) in L2 cache unit circuitry 376, a level 3 (L3) cache unit circuitry (not shown), and/or main memory. The L2 cache unit circuitry 376 is coupled to one or more other levels of cache and eventually to a main memory.

The core 390 may support one or more instructions sets (e.g., the x86 instruction set (with some extensions that have been added with newer versions); the MIPS instruction set; the ARM instruction set (with optional additional extensions such as NEON)), including the instruction(s) described herein. In one embodiment, the core 390 includes logic to support a packed data instruction set extension (e.g., AVX1, AVX2), thereby allowing the operations used by many multimedia applications to be performed using packed data.

### Exemplary Execution Unit(s) Circuitry

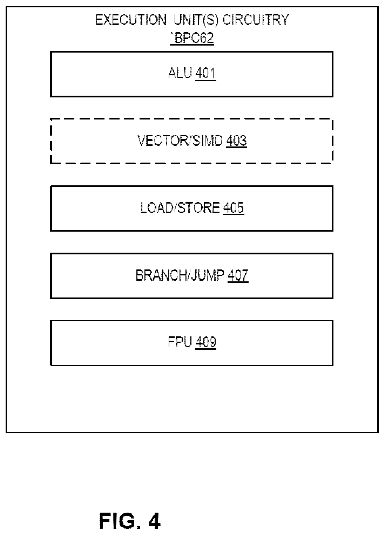

**FIG. 4** illustrates embodiments of execution unit(s) circuitry, such as execution unit(s) circuitry 362 of FIG. 3(B). As illustrated, execution unit(s) circuity 362 may include one or more ALU circuits 401, vector/SIMD unit circuits 403, load/store unit circuits 405, and/or branch/jump unit circuits 407. ALU circuits 401 perform integer arithmetic and/or Boolean operations. Vector/SIMD unit circuits 403 perform vector/SIMD operations on packed data (such as SIMD/vector registers). Load/store unit circuits 405 execute load and store instructions to load data from memory into registers or store from registers to memory. Load/store unit circuits 405 may also generate addresses. Branch/jump unit circuits 407 cause a branch or jump to a memory address depending on the instruction. Floating-point unit (FPU) circuits 409 perform floating-point arithmetic. The width of the execution unit(s) circuitry 362 varies depending upon the embodiment and can range from 16-bit to 1,024-bit. In some embodiments, two or more smaller execution units are logically combined to form a larger execution unit (e.g., two 128-bit execution units are logically combined to form a 256-bit execution unit).

### Exemplary Register Architecture

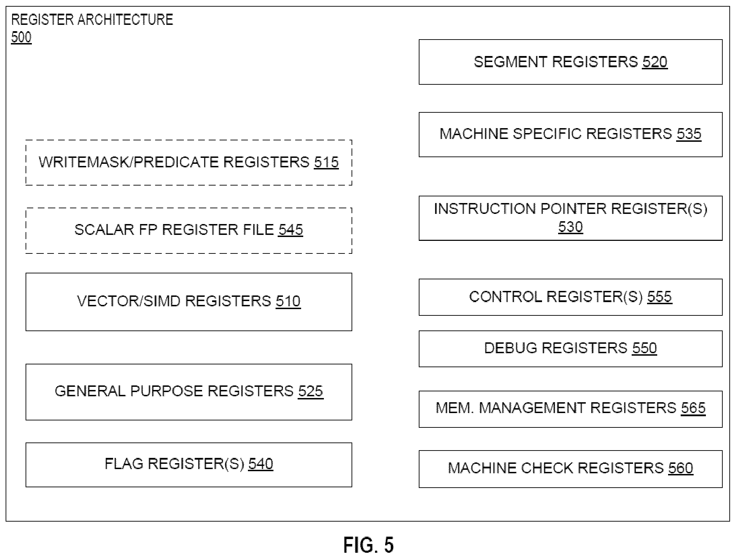

**FIG. 5** is a block diagram of a register architecture 500 according to some embodiments. As illustrated, there are vector/SIMD registers 510 that vary from 128-bit to 1,024 bits width. In some embodiments, the vector/SIMD registers 510 are physically 512-bits and, depending upon the mapping, only some of the lower bits are used. For example, in some embodiments, the vector/SIMD registers 510 are ZMM registers which are 512 bits: the lower 256 bits are used for YMM registers and the lower 128 bits are used for XMM registers. As such, there is an overlay of registers. In some embodiments, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the embodiment.

In some embodiments, the register architecture 500 includes writemask/predicate registers 515. For example, in some embodiments, there are 8 writemask/predicate registers (sometimes called k0 through k7) that are each 16-bit, 32-bit, 64-bit, or 128-bit in size. Writemask/predicate registers 515 may allow for merging (e.g., allowing any set of elements in the destination to be protected from updates during the execution of any operation) and/or zeroing (e.g., zeroing vector masks allow any set of elements in the destination to be zeroed during the execution of any operation). In some embodiments, each data element position in a given writemask/predicate register 515 corresponds to a data element position of the destination. In other embodiments, the writemask/predicate registers 515 are scalable and consists of a set number of enable bits for a given vector element (e.g., 8 enable bits per 64-bit vector element).

The register architecture 500 includes a plurality of general-purpose registers 525. These registers may be 16-bit, 32-bit, 64-bit, etc. and can be used for scalar operations. In some embodiments, these registers are referenced by the names RAX, RBX, RCX, RDX, RBP, RSI, RDI, RSP, and R8 through R15.

In some embodiments, the register architecture 500 includes scalar floating-point register 545 which is used for scalar floating-point operations on 32/64/80-bit floating-point data using the x87 instruction set extension or as MMX registers to perform operations on 64-bit packed integer data, as well as to hold operands for some operations performed between the MMX and XMM registers.

One or more flag registers 540 (e.g., EFLAGS, RFLAGS, etc.) store status and control information for arithmetic compare, and system operations. For example, the one or more flag registers 540 may store condition code information such as carry, parity, auxiliary carry, zero, sign, and overflow. In some embodiments, the one or more flag registers 540 are called program status and control registers.

Segment registers 520 contain segment points for use in accessing memory. In some embodiments, these registers are referenced by the names CS, DS, SS, ES, FS, and GS.

Machine specific registers (MSRs) 535 control and report on processor performance. Most MSRs 535 handle system-related functions and are not accessible to an application program. Machine check registers 560 consist of control, status, and error reporting MSRs that are used to detect and report on hardware errors.

One or more instruction pointer register(s) 530 store an instruction pointer value. Control register(s) 555 (e.g., CR0-CR4) determine the operating mode of a processor (e.g., processor 170, 180, 138, 115, and/or 200) and the characteristics of a currently executing task. Debug registers 550 control and allow for the monitoring of a processor or core's debugging operations.

Memory management registers 565 specify the locations of data structures used in protected mode memory management. These registers may include a GDTR, IDRT, task register, and a LDTR register.

Alternative embodiments of the invention may use wider or narrower registers. Additionally, alternative embodiments of the invention may use more, less, or different register files and registers.

### Instruction Sets

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands.

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

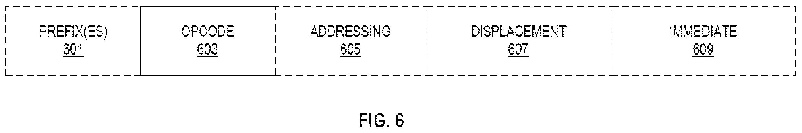

**FIG. 6** illustrates embodiments of an instruction format. As illustrated, an instruction may include multiple components including, but not limited to, one or more fields for: one or more prefixes 601, an opcode 603, addressing information 605 (e.g., register identifiers, memory addressing information, etc.), a displacement value 607, and/or an immediate 609. Note that some instructions utilize some or all of the fields of the format whereas others may only use the field for the opcode 603. In some embodiments, the order illustrated is the order in which these fields are to be encoded, however, it should be appreciated that in other embodiments these fields may be encoded in a different order, combined, etc.

The prefix(es) field(s) 601, when used, modifies an instruction. In some embodiments, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 603 is used to at least partially define the operation to be performed upon a decoding of the instruction. In some embodiments, a primary opcode encoded in the opcode field 603 is 1, 2, or 3 bytes in length. In other embodiments, a primary opcode can be a different length. An additional 3-bit opcode field is sometimes encoded in another field.

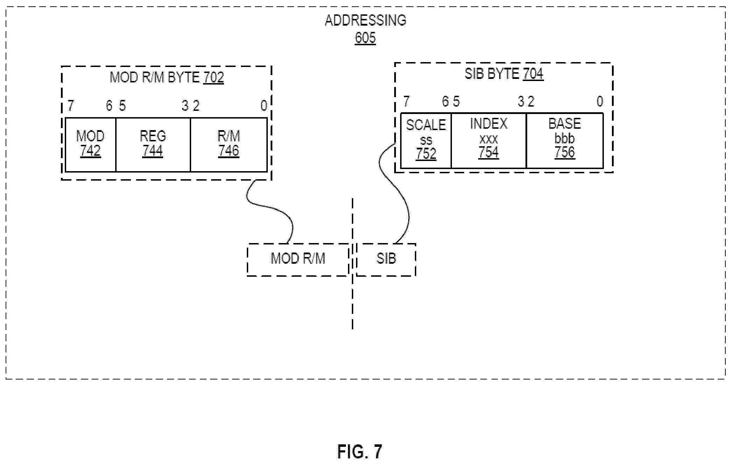

The addressing field 605 is used to address one or more operands of the instruction, such as a location in memory or one or more registers. FIG. 7 illustrates embodiments of the addressing field 605. In this illustration, an optional ModR/M byte 702 and an optional Scale, Index, Base (SIB) byte 704 are shown. The ModR/M byte 702 and the SIB byte 704 are used to encode up to two operands of an instruction, each of which is a direct register or effective memory address. Note that each of these fields are optional in that not all instructions include one or more of these fields. The MOD R/M byte 702 includes a MOD field 742, a register field 744, and R/M field 746.

The content of the MOD field 742 distinguishes between memory access and non-memory access modes. In some embodiments, when the MOD field 742 has a value of b11, a register-direct addressing mode is utilized, and otherwise register-indirect addressing is used.

The register field 744 may encode either the destination register operand or a source register operand, or may encode an opcode extension and not be used to encode any instruction operand. The content of register index field 744, directly or through address generation, specifies the locations of a source or destination operand (either in a register or in memory). In some embodiments, the register field 744 is supplemented with an additional bit from a prefix (e.g., prefix 601) to allow for greater addressing.

The R/M field 746 may be used to encode an instruction operand that references a memory address, or may be used to encode either the destination register operand or a source register operand. Note the R/M field 746 may be combined with the MOD field 742 to dictate an addressing mode in some embodiments.

The SIB byte 704 includes a scale field 752, an index field 754, and a base field 756 to be used in the generation of an address. The scale field 752 indicates scaling factor. The index field 754 specifies an index register to use. In some embodiments, the index field 754 is supplemented with an additional bit from a prefix (e.g., prefix 601) to allow for greater addressing. The base field 756 specifies a base register to use. In some embodiments, the base field 756 is supplemented with an additional bit from a prefix (e.g., prefix 601) to allow for greater addressing. In practice, the content of the scale field 752 allows for the scaling of the content of the index field 754 for memory address generation (e.g., for address generation that uses 2^{scale} * index + base).

Some addressing forms utilize a displacement value to generate a memory address. For example, a memory address may be generated according to 2^{scale} * index + base + displacement, index*scale+displacement, r/m + displacement, instruction pointer (RIP/EIP) + displacement, register + displacement, etc. The displacement may be a 1-byte, 2-byte, 4-byte, etc. value. In some embodiments, a displacement field 607 provides this value. Additionally, in some embodiments, a displacement factor usage is encoded in the MOD field of the addressing field 605 that indicates a compressed displacement scheme for which a displacement value is calculated by multiplying disp8 in conjunction with a scaling factor N that is determined based on the vector length, the value of a b bit, and the input element size of the instruction. The displacement value is stored in the displacement field 607.

In some embodiments, an immediate field 609 specifies an immediate for the instruction. An immediate may be encoded as a 1-byte value, a 2-byte value, a 4-byte value, etc.

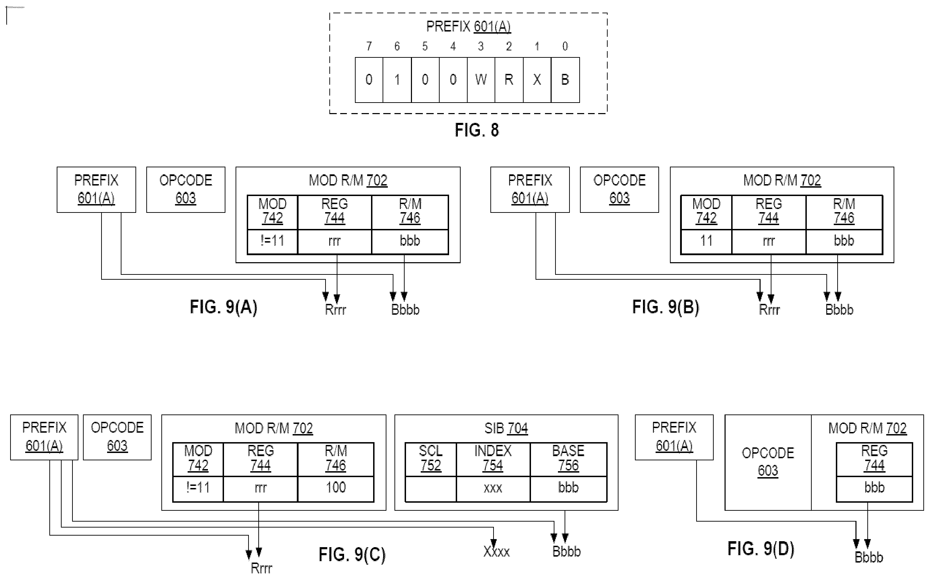

**FIG. 8** illustrates embodiments of a first prefix 601(A). In some embodiments, the first prefix 601(A) is an embodiment of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 601(A) may specify up to three registers using 3-bit fields depending on the format: 1) using the reg field 744 and the R/M field 746 of the Mod R/M byte 702; 2) using the Mod R/M byte 702 with the SIB byte 704 including using the reg field 744 and the base field 756 and index field 754; or 3) using the register field of an opcode.

In the first prefix 601(A), bit positions 7:4 are set as 0100. Bit position 3 (W) can be used to determine the operand size, but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 744 and MOD R/M R/M field 746 alone can each only address 8 registers.

In the first prefix 601(A), bit position 2 (R) may an extension of the MOD R/M reg field 744 and may be used to modify the ModR/M reg field 744 when that field encodes a general purpose register, a 64-bit packed data register (e.g., a SSE register), or a control or debug register. R is ignored when Mod R/M byte 702 specifies other registers or defines an extended opcode.

Bit position 1 (X) X bit may modify the SIB byte index field 754.

Bit position B (B) B may modify the base in the Mod R/M R/M field 746 or the SIB byte base field 756; or it may modify the opcode register field used for accessing general purpose registers (e.g., general purpose registers 525).

**FIGS. 9(A)****-(D)** illustrate embodiments of how the R, X, and B fields of the first prefix 601(A) are used. **FIG. 9(A)** illustrates R and B from the first prefix 601(A) being used to extend the reg field 744 and R/M field 746 of the MOD R/M byte 702 when the SIB byte 7 04 is not used for memory addressing. **FIG. 9(B)** illustrates R and B from the first prefix 601(A) being used to extend the reg field 744 and R/M field 746 of the MOD R/M byte 702 when the SIB byte 7 04 is not used (register-register addressing). **FIG. 9(C)** illustrates R, X, and B from the first prefix 601(A) being used to extend the reg field 744 of the MOD R/M byte 702 and the index field 754 and base field 756 when the SIB byte 7 04 being used for memory addressing. **FIG. 9(D)** illustrates B from the first prefix 601(A) being used to extend the reg field 744 of the MOD R/M byte 702 when a register is encoded in the opcode 603.

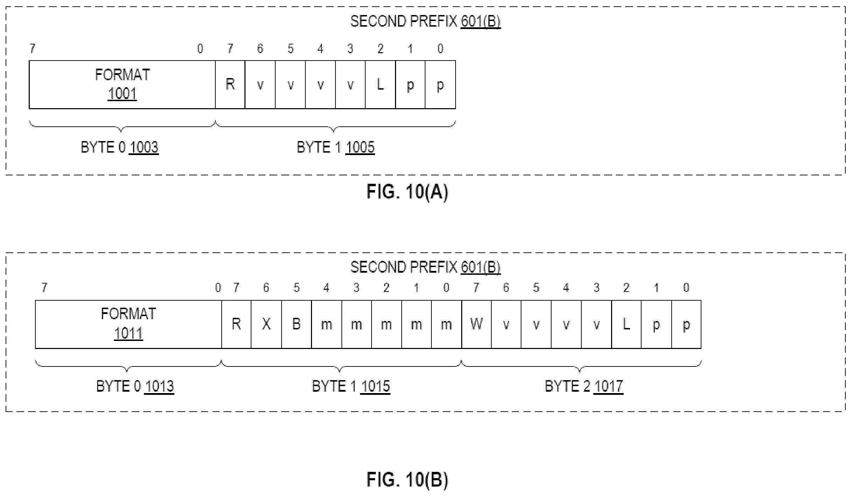

**FIGS. 10(A)****-(B)** illustrate embodiments of a second prefix 601(B). In some embodiments, the second prefix 601(B) is an embodiment of a VEX prefix. The second prefix 601(B) encoding allows instructions to have more than two operands, and allows SIMD vector registers (e.g., vector/SIMD registers 510) to be longer than 64-bits (e.g., 128-bit and 256-bit). The use of the second prefix 601(B) provides for three-operand (or more) syntax. For example, previous two-operand instructions performed operations such as A = A + B, which overwrites a source operand. The use of the second prefix 601(B) enables operands to perform nondestructive operations such as A = B + C.

In some embodiments, the second prefix 601(B) comes in two forms - a two-byte form and a three-byte form. The two-byte second prefix 601(B) is used mainly for 128-bit, scalar, and some 256-bit instructions; while the three-byte second prefix 601(B) provides a compact replacement of the first prefix 601(A) and 3-byte opcode instructions.

**FIG. 10(A)** illustrates embodiments of a two-byte form of the second prefix 601(B). In one example, a format field 1001 (byte 0 1003) contains the value C5H. In one example, byte 1 1005 includes a "R" value in bit[7]. This value is the complement of the same value of the first prefix 601(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746 and the Mod R/M reg field 744 encode three of the four operands. Bits[7:4] of the immediate 609 are then used to encode the third source register operand.

**FIG. 10(B)** illustrates embodiments of a three-byte form of the second prefix 601(B). in one example, a format field 1011 (byte 0 1013) contains the value C4H. Byte 1 1015 includes in bits[7:5] "R," "X," and "B" which are the complements of the same values of the first prefix 601(A). Bits[4:0] of byte 1 1015 (shown as mmmmm) include content to encode, as need, one or more implied leading opcode bytes. For example, 00001 implies a 0FH leading opcode, 00010 implies a 0F38H leading opcode, 00011 implies a leading 0F3AH opcode, etc.

Bit[7] of byte 2 1017 is used similar to W of the first prefix 601(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746, and the Mod R/M reg field 744 encode three of the four operands. Bits[7:4] of the immediate 609 are then used to encode the third source register operand.

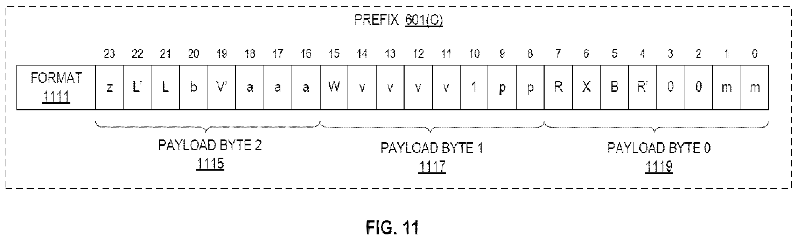

FIG. 11 illustrates embodiments of a third prefix 601(C). In some embodiments, the first prefix 601(A) is an embodiment of an EVEX prefix. The third prefix 601(C) is a four-byte prefix.

The third prefix 601(C) can encode 32 vector registers (e.g., 128-bit, 256-bit, and 512-bit registers) in 64-bit mode. In some embodiments, instructions that utilize a writemask/opmask (see discussion of registers in a previous figure, such as FIG. 5) or predication utilize this prefix. Opmask register allow for conditional processing or selection control. Opmask instructions, whose source/destination operands are opmask registers and treat the content of an opmask register as a single value, are encoded using the second prefix 601(B).

The third prefix 601(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 601(C) is a format field 1111 that has a value, in one example, of 62H. Subsequent bytes are referred to as payload bytes 1115-1119 and collectively form a 24-bit value of P[23:0] providing specific capability in the form of one or more fields (detailed herein).

In some embodiments, P[1:0] of payload byte 1119 are identical to the low two mmmmm bits. P[3:2] are reserved in some embodiments. Bit P[4] (R') allows access to the high 16 vector register set when combined with P[7] and the ModR/M reg field 744. P[6] can also provide access to a high 16 vector register when SIB-type addressing is not needed. P[7:5] consist of an R, X, and B which are operand specifier modifier bits for vector register, general purpose register, memory addressing and allow access to the next set of 8 registers beyond the low 8 registers when combined with the ModR/M register field 744 and ModR/M R/M field 746. P[9:8] provide opcode extensionality equivalent to some legacy prefixes (e.g., 00 = no prefix, 01 = 66H, 10 = F3H, and 11 = F2H). P[10] in some embodiments is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 601(A) and second prefix 611(B) and may serve as an opcode extension bit or operand size promotion.

P[18:16] specify the index of a register in the opmask (writemask) registers (e.g., writemask/predicate registers 515). In one embodiment of the invention, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While embodiments of the invention are described in which the opmask field's content selects one of a number of opmask registers that contains the opmask to be used (and thus the opmask field's content indirectly identifies that masking to be performed), alternative embodiments instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Exemplary embodiments of encoding of registers in instructions using the third prefix 601(C) are detailed in the following tables.

**Table 1: 32-Register Support in 64-bit Mode**

| | **4** | **3** | **[2:0]** | **REG. TYPE** | **COMMON USAGES** |
|---|---|---|---|---|---|
| **REG** | R' | R | ModR/M reg | GPR, Vector | Destination or Source |
| **VVVV** | V' | vvvv | | GPR, Vector | 2nd Source or Destination |
| **RM** | X | B | ModR/M R/M | GPR, Vector | 1st Source or Destination |
| **BASE** | 0 | B | ModR/M R/M | GPR | Memory addressing |
| **INDEX** | 0 | X | SIB.index | GPR | Memory addressing |
| **VIDX** | V' | X | SIB.index | Vector | VSIB memory addressing |

**Table 2: Encoding Register Specifiers in 32-bit Mode**

| | **[2:0]** | **REG. TYPE** | **COMMON USAGES** |
|---|---|---|---|
| **REG** | ModR/M reg | GPR, Vector | Destination or Source |
| **VVVV** | vvvv | GPR, Vector | 2^{nd} Source or Destination |
| **RM** | ModR/M R/M | GPR, Vector | 1^{st} Source or Destination |
| **BASE** | ModR/M R/M | GPR | Memory addressing |
| **INDEX** | SIB.index | GPR | Memory addressing |
| **VIDX** | SIB.index | Vector | VSIB memory addressing |

**Table 3: Opmask Register Specifier Encoding**

| | **[2:0]** | **REG. TYPE** | **COMMON USAGES** |
|---|---|---|---|
| **REG** | ModR/M Reg | k0-k7 | Source |
| **vvvv** | vvvv | k0-k7 | 2^{nd} Source |
| **RM** | ModR/M R/M | k0-7 | 1^{st} Source |
| **{k1]** | aaa | k0¹-k7 | Opmask |

Program code may be applied to input instructions to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

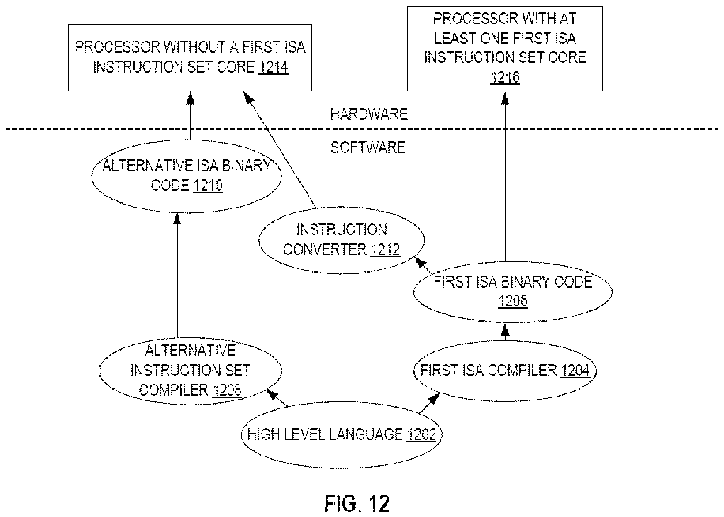

**FIG. 12** illustrates a block diagram contrasting the use of a software instruction converter to convert binary instructions in a source instruction set to binary instructions in a target instruction set according to certain implementations. In the illustrated embodiment, the instruction converter is a software instruction converter, although alternatively the instruction converter may be implemented in software, firmware, hardware, or various combinations thereof. FIG. 12 shows a program in a high level language 1202 may be compiled using a first ISA compiler 1204 to generate first ISA binary code 1206 that may be natively executed by a processor with at least one first instruction set core 1216. The processor with at least one first ISA instruction set core 1216 represents any processor that can perform substantially the same functions as an Intel^{®} processor with at least one first ISA instruction set core by compatibly executing or otherwise processing (1) a substantial portion of the instruction set of the first ISA instruction set core or (2) object code versions of applications or other software targeted to run on an Intel processor with at least one first ISA instruction set core, in order to achieve substantially the same result as a processor with at least one first ISA instruction set core. The first ISA compiler 1204 represents a compiler that is operable to generate first ISA binary code 1206 (e.g., object code) that can, with or without additional linkage processing, be executed on the processor with at least one first ISA instruction set core 1216.

Similarly, **FIG. 12** shows the program in the high level language 1202 may be compiled using an alternative instruction set compiler 1208 to generate alternative instruction set binary code 1210 that may be natively executed by a processor without a first ISA instruction set core 1214. The instruction converter 1212 is used to convert the first ISA binary code 1206 into code that may be natively executed by the processor without a first ISA instruction set core 1214. This converted code is not likely to be the same as the alternative instruction set binary code 1210 because an instruction converter capable of this is difficult to make; however, the converted code will accomplish the general operation and be made up of instructions from the alternative instruction set. Thus, the instruction converter 1212 represents software, firmware, hardware, or a combination thereof that, through emulation, simulation or any other process, allows a processor or other electronic device that does not have a first ISA instruction set processor or core to execute the first ISA binary code 1206.

In one embodiment, the performance monitoring is built on two sets of event counters: fixed function counters and general purpose counters. Three fixed function counters are currently defined and implemented to count instructions retired, reference clocks, and core clocks. In order to perform PEBS-based sampling for fixed performance monitoring events, such as instructions retired, reference clocks, and core clocks, the general purpose counters must be configured with those events, consuming an important processor resource.

To address this limitation, the (non-) precise event based sampling feature that exists using the general purpose counters is complemented by allowing the fixed performance counters to implement PEBS, NPEBS, and precise distribution of instructions retired (PDIR). Out of the three fixed events, only instructions retired will be truly precise while the core and reference clocks events will be non-precise precise events that use the NPEBS triggering mechanism.

As used herein, Precise Event Based Sampling (PEBS) includes a debug store mechanism to periodically store a set of architectural state information. To sample every "nth" event associated with a counter, "-n" may be programmed into the counter as well as into a memory-based control block location associated with the counter. When the counter reaches 0, and after a slight pipeline delay (in which additional events may occur), the next event causes a sample to be taken. The counter will then be reloaded with "-n" from the memory-based control block and execution and counting continue. Only a subset of events in the general purpose counter event list currently support PEBS, which includes instructions retired, but not reference clocks or core clocks. The sample is collected using a combination of hardware and microcode, and does not require an interrupt or any macrocode execution. Once the buffer fills to a predefined threshold, a Performance Monitoring Interrupt (PMI) is taken, and a macrocode handler is invoked to process the samples in the buffer.

In one embodiment, Precise Distribution of Instructions retired (PDIR) is a feature that may be applied to some of the general purpose counters which aims to reduce the aforementioned "slight pipeline delay" thus reducing missed events between the counter overflowing and the sample being taken.

In one embodiment, Non-Precise Event Based Sampling (NPEBS) uses the same debug store mechanism as PEBS to periodically store a set of architectural state information, but with a slightly different semantic. The same sampling control mechanism is used, but the sample is taken at the next opportunity after the counter reaches 0. It is considered "non-precise" because the sampled instruction may not be the one that experienced the event. NPEBS is engaged when PEBS is configured for an event that is not part of the PEBS-able event list such as Reference Clocks and Core Clocks. In some implementations, general purpose counters are used. Without NPEBS, the only way to get statistical samples based on clock events is to take a costly PMI each time an appropriately configured counter overflows.

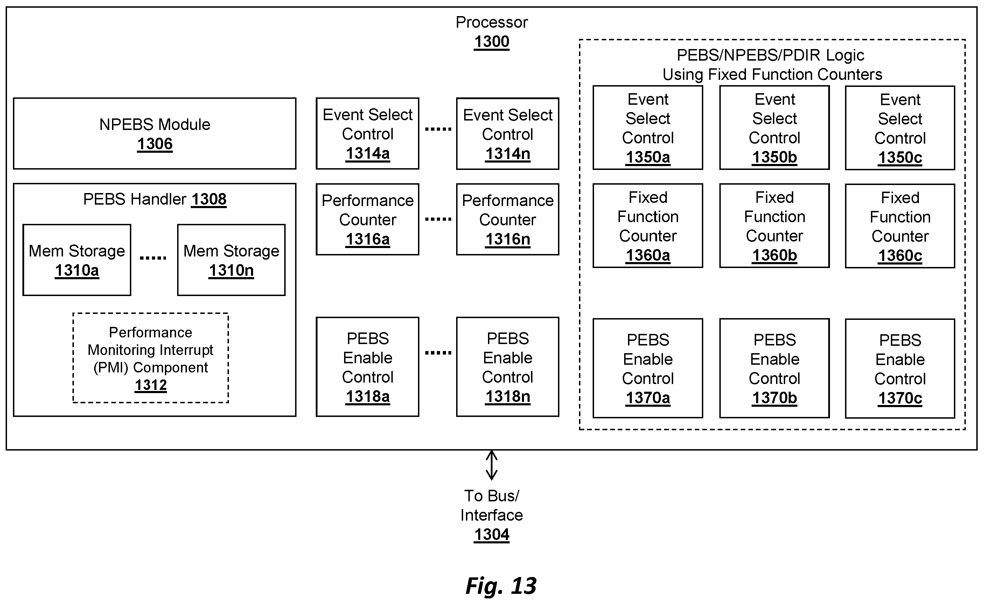

**FIG. 13** illustrates an example processor 1300 with an NPEBS module 1306 and a PEBS handler 1308 having one or more memory storages 1310a to 1310n (which may be implemented as physical memory storage such as a buffer). The PEBS handler 1308 may also include a performance monitoring interrupt (PMI) component 1312. In addition, the processor 102 may include one or more event select (ES) controls 1314a to 1314n corresponding to one or more general purpose performance counters 1316a-1316n and further corresponding to one or more PEBS enable controls 1318a-1318n. In some implementations, PEBS enable controls 1318a-1318n may be located in a single control register (e.g., model specific register (MSR)).

In addition, in the embodiment shown in FIG. 13, PEBS, NPEBS, and PDIR operations are applied using fixed function counters 1360a-c. In one embodiment, the three fixed function counters 1360a-c are defined and implemented to count instructions retired, reference clocks, and core clocks. It will be appreciated, however, that the underlying principles of the invention are not limited to any particular number of fixed function counters or any particular fixed function counter implementation.

As mentioned, the processor 1300 may execute a stream of instructions that may be embedded with markers for events that may be placed on a bus/interconnect fabric 1304. The execution of a segment of instructions may constitute one or more non-precise events. A non-precise event is a performance event that is either not linked to a specific instruction or micro-operation in an instruction trace or can occur speculatively when the instruction or micro-operation does not retire. Such non-precise events may include, but are not limited to, reference clocks, core clocks and cycles, to name a few examples. In one embodiment, the non-precise event is generated by the processor 1302. In another embodiment, the non-precise event is generated outside the processor 1302 and communicated to the processor via the bus/interconnect fabric 1304.

In one embodiment, event select (ES) controls 1350a-c shown in Figure 13 perform similar operations to ES controls 1314a-c described above but correspond to the fixed function performance counters 1360a-c and further correspond PEBS enable controls 1370a-c associated with the fixed function counters 1360a-c. In one embodiment, the PEBS enable controls 1318a-1318n and 1370a-c are located in a single control register.

### APPARATUS AND METHOD FOR FINE GRAIN USER MODE CONTROL FOR READING PERFORMANCE MONITOR COUNTERS

As mentioned, allowing applications to read performance counters in ring 3 using the Read Performance Monitor Counter (RDPMC) instructions (for performance reasons) requires allowing access to all performance counters due to the granularity of the CR4 control bit (i.e., 1 = allowed, 0 = not allowed). Thus, an application permitted to use the RDPMC instruction can read any global performance counter events currently active in a hardware performance counter, potentially including events that are not permitted for the application context, such as ring 0 data when the application only has rights to use ring 3 performance events. Preventing this leak requires disabling of all RDPMC accesses for ring 3, forcing applications to use a significantly more expensive system call to the OS kernel to read performance counter events.

A processor may have a certain number of configurable performance counter registers that can be programmed to count different microarchitecture defined events. The programing is done through an event select configuration (EVNTSELx) MSR (e.g., event select control registers 1314a-n in Figure 13) that contains the event code, enable bits, and various filter settings (e.g. count ring 3, count ring 0, etc.). This configuration register controls an associated performance counter register (PERFCTRx) (e.g., performance counter registers 1316a-n in Figure 13) that counts the specified event. When enabled in the control register, the event count will increase each time the programmed event occurs. A global configuration register, CR4 includes a bit, among other configuration fields, to control ring 3 access for the RDPMC instruction.

Embodiments of the invention add a new bit to each event select configuration register (EVNTSELx) that disables ring 3 access with the RDPMC instruction for the associated performance counter register value, even if it was enabled in the CR4 control bit, thereby providing the performance counter driver with fine-grained access control of applications for every event. In these embodiments, when ring 3 access is disallowed through RDPMC_USER_DISABLE for a specific counter and the RDPMC instruction tries to read it from ring 3 it will return a 0 value.

In some embodiments, the RDPMC_USER_DISABLE configuration is also extended to fixed performance counters that only count a specific kind of event. Fixed performance counters have a global FIXED_CTR control register that controls all FIXED_CTRx counter registers. The FIXED_CTL register adds RDPMC_USER_DISABLE bits for each available fixed counter registers.

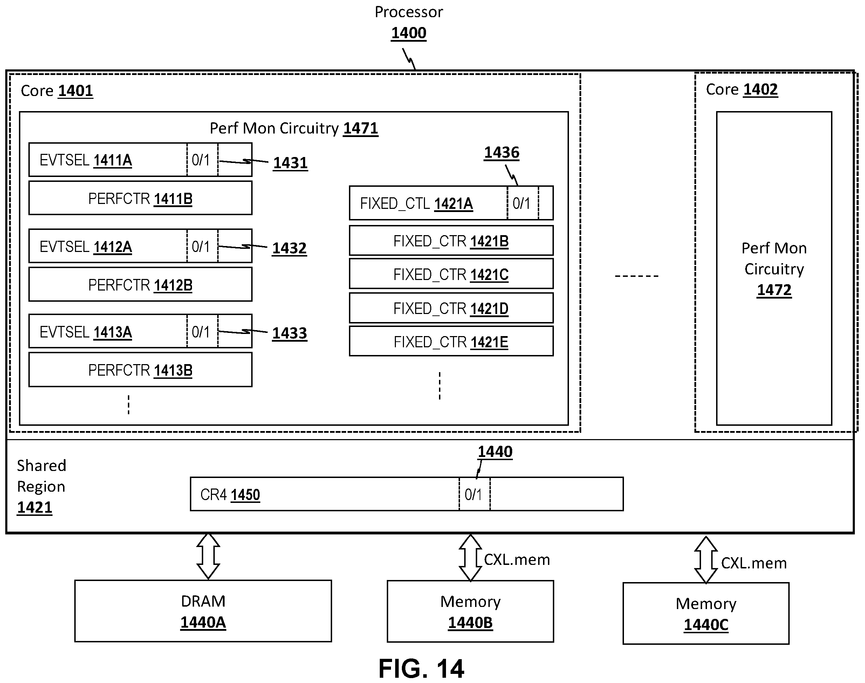

Figure 14 illustrates an example processor 1400 on which embodiments of the invention may be implemented. Each core 1401-1402 or logical processor (e.g., a fraction of a core) includes performance monitoring circuitry 1471-1472, respectively, for collecting performance monitoring data. While details of a single core 1401 are shown for simplicity, other processor cores may be configured with the same performance monitoring circuitry.

Performance monitoring circuitry 1471 of the core 1401 (or logical processor) includes a plurality of performance event select MSRs 1411A, 1412A, and 1413, each of which can be programmed to control the operation of a respective performance counter 1411B, 1412B, and 1413B. In addition, a global control register (FIXED_CTL) 1421A can be programmed to control a set of fixed function performance counter registers (FIXED_CTRx) 1421A-D, which count fixed (non-programmable) events such as the number of instructions retired.

A shared region 1421 includes circuitry shared by the plurality of cores 1401-1402, such as a shared LLC, memory controllers, and control registers such as CR4 1450. As mentioned, CR4 includes a bit 1440 which can be set by supervisory software to enable reading of any performance counter in ring 3 with the RDPMC instruction.

In the illustrated embodiment, each performance event select MSR 1411A, 1412A, and 1413A includes a respective user disable bit 1431-1433 which can be set to disable ring 3 access to the respective counter values stored in the associated performance counter registers 1411B, 1412B, and 1413B, respectively, regardless of the value of bit 1440 in the CR4 register. This arrangement allows fine grained control over access to individual performance counter registers from ring 3 which was not previously available. In these embodiments, if ring 3 access is disallowed for a performance counter register based on the user disable bit in the corresponding performance event select MSR, execution of the RDPMC instruction will return a value of 0.

There are various reasons why a performance counter event may be disallowed for specific applications. For example, a first application may not be permitted to count events for ring 0 code which may execute instructions on behalf of other applications and should be protected from leaking information to the first application. Additionally, the application may not be permitted to count events for shared microarchitectural structures that could allow information leaks from other applications (e.g., shared caches).

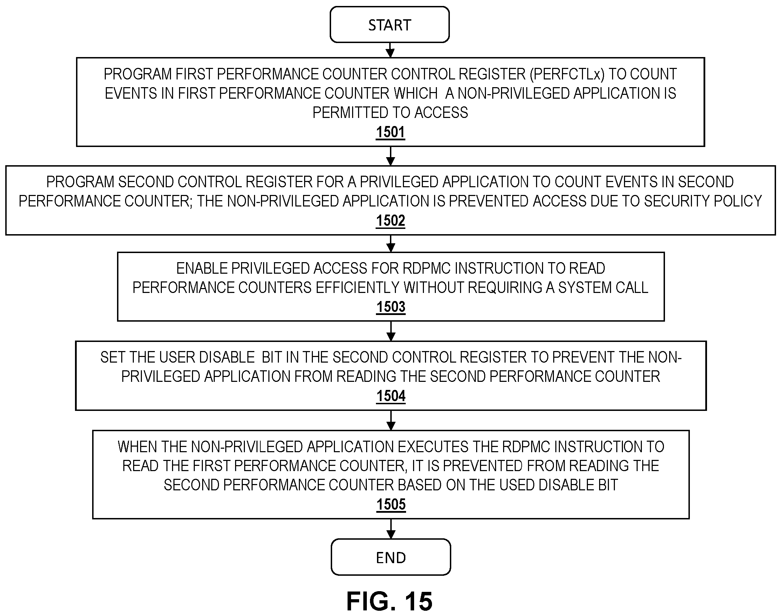

A method in accordance with at least one embodiment of the invention is illustrated in **Figure 15****.** The method may be performed on the various architectures described herein, but is not limited to any particular processor or system architecture. While this implementation is described with respect to a performance counter driver, the underlying principles of the invention may be implemented with a combination of hardware and software running at a sufficient privilege level.

At 1501, a first performance monitor control register (PERFCTLx) is programmed (e.g., by a performance counter driver), to count events in a first performance counter (PERFCTRx), which a non-privileged application is permitted to access. At 1502, a second control register is programmed for a privileged application to count events in second performance counter. In this scenario, the non-privileged application does not have access to the second performance counter due to the security policy.

At 1503, privileged access is enabled for RDPMC instructions to read performance counters efficiently without relying on system calls. In some embodiments, this is accomplished by setting a binary value in a control register (e.g., CR4). At 1504, the driver sets the User Disable bit in the second control register to prevent the non-privileged application from reading the second performance counter. At 1505, the non-privileged application executes the RDPMC instruction to read the first performance counter without a system call, but is prevented from reading the second performance counter that counts the event it is not permitted to access.

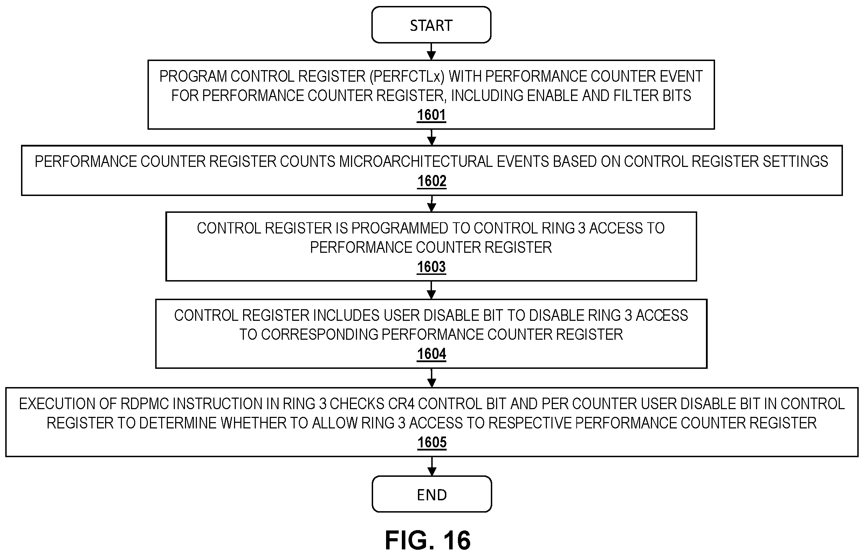

A method in accordance with at least one embodiment of the invention is illustrated in **Figure 16****.** The method may be performed on the various architectures described herein, but is not limited to any particular processor or system architecture.

At 1601, a control register (e.g., PERFCTLx) is programmed to indicate a microarchitectural performance counter event to be counted in the performance counter register, including enable and filter bits. At 1602, the performance counter register counts the microarchitectural event in accordance with the control register settings.

At 1603, a control register (e.g., CR4) is programmed to control ring 3 access to the performance counter register and, at 1604, the User Disable bit in the control register is set to disables or unset to enable ring 3 access by the RDPMC instruction for the corresponding performance counter register.

At 1605, execution of a RDPMC instruction in ring 3 checks the control register (e.g., CR4) bit and the per counter User Disable bit in the control register to determine whether to allow ring 3 access to the respective performance counter register.

Embodiments of the invention may include various steps, which have been described above. The steps may be embodied in machine-executable instructions which may be used to cause a general-purpose or special-purpose processor to perform the steps. Alternatively, these steps may be performed by specific hardware components that contain hardwired logic for performing the steps, or by any combination of programmed computer components and custom hardware components.

### EXAMPLES

The following are example implementations of different embodiments of the invention.

Example 1. A processor, comprising: a plurality of cores to execute first program code at a first privilege level and second program code at a second privilege level higher than the first privilege level, a core of the plurality of cores comprising: performance monitoring circuitry including a plurality of performance counter control registers to indicate events to be counted by a corresponding plurality of performance counters; and a processor control register to store a global control value to indicate whether the first program code is permitted to read values from the corresponding plurality of performance counters; wherein each performance counter control register is to store a per-counter control value to indicate whether the first program code executed at the first privilege level is permitted to read a corresponding value from a respective performance counter, regardless of the global control value.

Example 2. The processor of example 1, wherein the performance monitoring circuitry further includes: a plurality of fixed function performance counters to count a corresponding plurality of preconfigured events; and a fixed counter control register to store a fixed function counter control value to indicate whether the first program code executed at the first privilege level is permitted to read a value from any of the fixed function performance counters, regardless of the global control value.

Example 3. The processor of examples 1 or 2, wherein the per-counter control value comprises a first binary value which, when set to 1, indicates that the first program code executed at the first privilege level is not permitted to read a value from the corresponding performance counter, regardless of the global control value.

Example 4. The processor of any of examples 1-3, wherein the global control value comprises a second binary value which, when set to 1, indicates that the first program code executed at the first privilege level is permitted to read the corresponding plurality of performance counters.

Example 5. The processor of any of examples 1-4, wherein, when the first binary value is set to 0 and the second binary value is set to 1, the first program code is permitted to read a value from the corresponding performance counter.

Example 6. The processor of any of examples 1-5, wherein the first program code executed at the first privilege level is to execute a Read Performance Monitor Counter (RDPMC) instruction to attempt to read the corresponding performance counter, wherein the RDPMC instruction is to return a 0 if the first binary value is set to 1 and is to return the value from the corresponding performance counter if the first binary value is set to 0 and the second binary value is set to 1.

Example 7. The processor of any of examples 1-6, wherein the first privilege level comprises a privilege level corresponding to user applications and the second privilege level comprises a privilege level corresponding to an operating system kernel or driver.

Example 8. The processor of any of examples 1-7, further comprising: an interconnect to couple the plurality of cores to a shared cache and a memory controller, the memory controller to couple the plurality of cores to a system memory, wherein each core of the plurality of cores comprises: fetch circuitry to fetch instructions of the program code from the system memory; decode circuitry to decode the instructions; execution circuitry to execute the instructions; wherein the plurality of performance counter control registers are to indicate that the corresponding plurality of performance counters are to count events occurring within one or more of: the interconnect, the memory controller, the fetch circuitry, the decode circuitry, and the execution circuitry.

Example 9. A method, comprising: executing, on a core of a plurality of cores, first program code at a first privilege level and second program code at a second privilege level higher than the first privilege level; indicating, in a plurality of performance counter control registers, vents to be counted by a corresponding plurality of performance counters; storing, in a processor control register, a global control value to indicate whether the first program code is permitted to read values from the corresponding plurality of performance counters; and storing, in each performance counter control register, a per-counter control value to indicate whether the first program code executed at the first privilege level is permitted to read a corresponding value from a respective performance counter, regardless of the global control value.

Example 10. The method of example 9, further comprising: counting, by a plurality of fixed function performance counters, a plurality of preconfigured events; and storing, in a fixed counter control register, a fixed function counter control value to indicate whether the first program code executed at the first privilege level is permitted to read a value from any of the fixed function performance counters, regardless of the global control value.

Example 11. The method of examples 9 or 10, wherein the per-counter control value comprises a first binary value which, when set to 1, indicates that the first program code executed at the first privilege level is not permitted to read a value from the corresponding performance counter, regardless of the global control value.

Example 12. The method of any of examples 9-11, wherein the global control value comprises a second binary value which, when set to 1, indicates that the first program code executed at the first privilege level is permitted to read the corresponding plurality of performance counters.

Example 13. The method of any of examples 9-12, wherein, when the first binary value is set to 0 and the second binary value is set to 1, the first program code is permitted to read a value from the corresponding performance counter.

Example 14. The method of any of examples 9-13, wherein the first program code executed at the first privilege level is to execute a Read Performance Monitor Counter (RDPMC) instruction to attempt to read the corresponding performance counter, wherein the RDPMC instruction is to return a 0 if the first binary value is set to 1 and is to return the value from the corresponding performance counter if the first binary value is set to 0 and the second binary value is set to 1.

Example 15. The method of any of examples 9-14, wherein the first privilege level comprises a privilege level corresponding to user applications and the second privilege level comprises a privilege level corresponding to an operating system kernel or driver.

Example 16. A machine-readable medium having program code stored thereon which, when executed by a machine, causes the machine to perform the operations of: executing, on a core of a plurality of cores, first program code at a first privilege level and second program code at a second privilege level higher than the first privilege level; indicating, in a plurality of performance counter control registers, events to be counted by a corresponding plurality of performance counters; storing, in a processor control register, a global control value to indicate whether the first program code is permitted to read values from the corresponding plurality of performance counters; and storing, in each performance counter control register, a per-counter control value to indicate whether the first program code executed at the first privilege level is permitted to read a corresponding value from a respective performance counter, regardless of the global control value.

Example 17. The machine-readable medium of example 16, further comprising program code to cause the machine to perform the operations of: counting, by a plurality of fixed function performance counters, a plurality of preconfigured events; and storing, in a fixed counter control register, a fixed function counter control value to indicate whether the first program code executed at the first privilege level is permitted to read a value from any of the fixed function performance counters, regardless of the global control value.

Example 18. The machine-readable medium of examples 16 or 17, wherein the per-counter control value comprises a first binary value which, when set to 1, indicates that the first program code executed at the first privilege level is not permitted to read a value from the corresponding performance counter, regardless of the global control value.

Example 19. The method of any of examples 16-18, wherein the global control value comprises a second binary value which, when set to 1, indicates that the first program code executed at the first privilege level is permitted to read the corresponding plurality of performance counters.

Example 20. The method of any of examples 16-19, wherein, when the first binary value is set to 0 and the second binary value is set to 1, the first program code is permitted to read a value from the corresponding performance counter.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.).

In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware.

Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention. Accordingly, the scope and spirit of the invention should be judged in terms of the claims which follow.

## Claims

1. A processor, comprising:
a plurality of cores to execute first program code at a first privilege level and second program code at a second privilege level of higher privilege than the first privilege level,
a core of the plurality of cores comprising:
performance monitoring circuitry including a plurality of performance counter control registers to indicate events to be counted by a corresponding plurality of performance counters; and
a processor control register to store a global control value to indicate whether the first program code is permitted to read values from the corresponding plurality of performance counters;
wherein each performance counter control register is to store a per-counter control value to indicate whether the first program code executed at the first privilege level is permitted to read a corresponding value from a respective performance counter, regardless of the global control value.

2. The processor of claim 1, wherein the performance monitoring circuitry further includes:
a plurality of fixed function performance counters to count a corresponding plurality of preconfigured events; and
a fixed counter control register to store a fixed function counter control value to indicate whether the first program code executed at the first privilege level is permitted to read a value from any of the fixed function performance counters, regardless of the global control value.

3. The processor of claim 1 or 2, wherein the per-counter control value comprises a first binary value which, when set to 1, indicates that the first program code executed at the first privilege level is not permitted to read a value from the corresponding performance counter, regardless of the global control value.

4. The processor of claim 3, wherein the global control value comprises a second binary value which, when set to 1, indicates that the first program code executed at the first privilege level is permitted to read the corresponding plurality of performance counters.

5. The processor of claim 4, wherein, when the first binary value is set to 0 and the second binary value is set to 1, the first program code is permitted to read a value from the corresponding performance counter.

6. The processor of claim 5, wherein the first program code executed at the first privilege level is to execute a Read Performance Monitor Counter (RDPMC) instruction to attempt to read the corresponding performance counter, wherein the RDPMC instruction is to return a 0 if the first binary value is set to 1 and is to return the value from the corresponding performance counter if the first binary value is set to 0 and the second binary value is set to 1.

7. The processor of any of claims 1 to 6, wherein the first privilege level comprises a privilege level corresponding to user applications and the second privilege level comprises a privilege level corresponding to an operating system kernel or driver.

8. The processor of any of claims 1 to 7, further comprising:
an interconnect to couple the plurality of cores to a shared cache and a memory controller, the memory controller to couple the plurality of cores to a system memory, wherein each core of the plurality of cores comprises:
fetch circuitry to fetch instructions of the program code from the system memory;
decode circuitry to decode the instructions; and
execution circuitry to execute the instructions;
wherein the plurality of performance counter control registers are to indicate that the corresponding plurality of performance counters are to count events occurring within one or more of: the interconnect, the memory controller, the fetch circuitry, the decode circuitry, and the execution circuitry.

9. A method, comprising:
executing, on a core of a plurality of cores, first program code at a first privilege level and second program code at a second privilege level higher than the first privilege level;
indicating, in a plurality of performance counter control registers, events to be counted by a corresponding plurality of performance counters;
storing, in a processor control register, a global control value to indicate whether the first program code is permitted to read values from the corresponding plurality of performance counters; and
storing, in each performance counter control register, a per-counter control value to indicate whether the first program code executed at the first privilege level is permitted to read a corresponding value from a respective performance counter, regardless of the global control value.

10. The method of claim 9, further comprising:
counting, by a plurality of fixed function performance counters, a plurality of preconfigured events; and
storing, in a fixed counter control register, a fixed function counter control value to indicate whether the first program code executed at the first privilege level is permitted to read a value from any of the fixed function performance counters, regardless of the global control value.

11. The method of claim 9 or 10, wherein the per-counter control value comprises a first binary value which, when set to 1, indicates that the first program code executed at the first privilege level is not permitted to read a value from the corresponding performance counter, regardless of the global control value.

12. The method of claim 11, wherein the global control value comprises a second binary value which, when set to 1, indicates that the first program code executed at the first privilege level is permitted to read the corresponding plurality of performance counters.

13. The method of claim 12, wherein, when the first binary value is set to 0 and the second binary value is set to 1, the first program code is permitted to read a value from the corresponding performance counter.

14. The method of claim 13, wherein the first program code executed at the first privilege level is to execute a Read Performance Monitor Counter (RDPMC) instruction to attempt to read the corresponding performance counter, wherein the RDPMC instruction is to return a 0 if the first binary value is set to 1 and is to return the value from the corresponding performance counter if the first binary value is set to 0 and the second binary value is set to 1.

15. The method of any of claims 9 to 14, wherein the first privilege level comprises a privilege level corresponding to user applications and the second privilege level comprises a privilege level corresponding to an operating system kernel or driver.
